(19) Europäisches Patentamt
European Patent Office
Office européen des brevets

(11) **EP 1 528 995 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(21) Anmeldenummer: 03792362.0

(22) Anmeldetag: **18.08.2003**

(51) Int Cl.:
*B60S 1/38* (2006.01)  *C22C 38/18* (2006.01)
*C22C 38/22* (2006.01)  *C21D 9/02* (2006.01)

(86) Internationale Anmeldenummer:
**PCT/EP2003/009132**

(87) Internationale Veröffentlichungsnummer:
**WO 2004/018271 (04.03.2004 Gazette 2004/10)**

(54) **FEDERELEMENT AUS EINEM FERRITISCHEN CHROM-STAHL**

SPRING ELEMENT MADE FROM A FERRITIC CHROME STEEL

ELEMENT FLEXIBLE EN ACIER FERRITIQUE AU CHROME

(84) Benannte Vertragsstaaten:
**BE DE ES FR GB**

(30) Priorität: **16.08.2002 DE 10237446**
**21.07.2003 DE 10333272**

(43) Veröffentlichungstag der Anmeldung:
**11.05.2005 Patentblatt 2005/19**

(73) Patentinhaber: **Stahlwerk Ergste Westig GmbH**
**58239 Schwerte (DE)**

(72) Erfinder:
• **PACHER, Oskar**
**A-8041 Graz (AT)**
• **KLOSS-ULITZKA, Gisbert**
**58809 Neuenrade (DE)**
• **CASTRO, Victor**
**44287 Dortmund (DE)**

(74) Vertreter: **Tilmann, Max Wilhelm**
**König Szynka Tilmann von Renesse**
**Patentanwälte Partnerschaft**
**Postfach 11 09 46**
**40509 Düsseldorf (DE)**

(56) Entgegenhaltungen:
**DE-A- 10 113 657**       **US-A- 2 527 521**
**US-A- 4 022 640**

EP 1 528 995 B1

**Beschreibung**

Die Erfindung bezieht sich auf ein Federelement, insbesondere auf eine Federschiene für Scheibenwischer, wie sie beispielsweise bei den üblicherweise gekrümmten Windschutzscheiben von Kraftfahrzeugen, Schienenfahrzeugen, Schiffen und Flugzeugen zur Verwendung kommen.

Scheibenwischer bestehen üblicherweise aus einem Wischerhebel mit einem Wischerblatt aus einer Federschiene und einer Wischleiste, das mit Hilfe von Federkräften an die zu reinigende Scheibe gepreßt wird. Um die notwendige Reinigungswirkung zu erreichen, ist es erforderlich, daß die gummielastische Wischleiste unabhängig von der Scheibenkrümmung stets dicht an der Scheibenoberfläche anliegt. Dies gewährleisten zwischen dem Wischerhebel und der Wischleiste angeordnete Federelemente, insbesondere auch die Federschiene, deren Länge im wesentlichen der gummielastischen Wischleiste entspricht.

Bei hohen Fahr- und/oder Windgeschwindigkeiten kommt es jedoch zu Turbulenzen und Schwingungen mit der Folge, daß die Wischleiste nicht über ihre gesamte Länge und/oder während ihrer gesamten Pendelbewegung gleichmäßig und mit hinreichender Anpreßkraft an der Scheibe anliegt, so daß Wasserfilme und an der Scheibe haftender Schmutz nicht zuverlässig entfernt werden.

Moderne Scheibenwischer bestehen aus einem an einem motorisch angetriebenen Wischerhebel gelenkig angeordneten Hauptbügel, an dessen beiden Enden jeweils ein Krallenbügel gelenkig befestigt ist. Die Krallenbügel sind am einen Ende gelenkig mit einer Federschiene und am anderen Ende gelenkig mit Krallen verbunden, deren beiden Enden über Gelenke jeweils mit der Federschiene verbunden sind. Die Federschiene ist über ihre gesamte Länge in die gummielastische Wischleiste eingebettet.

Das aus insgesamt fünf Bügeln und Federschiene bestehende Federsystem soll eine gleichmäßige Anlage der Wischleiste an der Scheibe gewährleisten. Um das zu erreichen und insbesondere Ratterschwingungen zu unterdrücken, müssen die Abstände der beiden Krallenbügel und deren Länge auf die Scheibengeometrie abgestimmt sein. Weitere Kriterien sind die Größe der zu überstreichenden Scheibenfläche, die Länge der Wischblätter, die Ausrichtung der Pendelachse des Wischerarms zur Scheibenoberfläche und insbesondere die Federkraft sowie die Breite und Dicke der Federschiene. Eine rechnerische Erfassung ist dabei kaum möglich; die Beschaffenheit der Krallenbügel und deren Positionierung in bezug auf das Wischerblatt beruhen daher zumeist auf praktischen Erfahrungen.

Trotz aller Bemühungen gelingt es nur in Grenzen, ein Rattern und das Auftreten von Schwingungen bei hohen Fahr- und/oder Windgeschwindigkeiten zu vermeiden. Demzufolge ist das Wischergebnis unbefriedigend und kommt es zudem zu einem starken Abrieb an der Wischkante der Wischleiste sowie zu störenden Betriebsgeräuschen und zu einer Verkürzung der Lebensdauer der Wischleiste.

Die europäische Offenlegungsschrift ,1 288 089 A2 schlägt zur Geräuschverminderung vor, den Reibungskoeffizienten einer Wischleiste mit einem speziellen Profil mit Hilfe einer Polymerbeschichtung zu verringern. Dies ist jedoch nicht nur sehr aufwendig, sondern erleichtert auch das Auftreten von Schwingungen in Folge des geringeren Reibungskoeffizienten. Des weiteren schlägt die PCT-Offenlegungsschrift WO 01/58732 A1 vor, anstelle einer einzigen, sich praktisch über die gesamte Länge der Wischleiste erstreckenden Federschiene zwei parallel zueinander verlaufender Federschienen mit unterschiedlicher Resonanzfrequenz zu verwenden, um das Auftreten von Wischerblattschwingungen zu unterdrücken. Unterschiedliche Resonanzfrequenzen erfordern jedoch hinsichtlich ihres Querschnitts und/oder ihres Werkstoffs unterschiedliche Federschienen und damit einen zusätzlichen Aufwand sowohl bei der Herstellung als auch bei der Lagerung und im Ersatzteilwesen. Hinzu kommt, daß sich das Schwingungsverhalten durch die Verwendung zweier Federschienen mit unterschiedlicher Resonanzfrequenz nur innerhalb eines verhältnismäßig engen Frequenzfensters vermeiden läßt und daher nicht alle in der Praxis auftretenden Betriebs- bzw. Schwingungszustände erfaßt.

Als Werkstoff für Federelemente und Federschienen kommen üblicherweise legierte Stähle zur Verwendung, weil reine Kohlenstoffstähle ein geringes Dämpfungsvermögen besitzen und daher störende Schwingungen nicht rasch genug abbauen. Dies ist die Folge davon, daß im Gefüge kaum energieverzehrende Vorgänge ablaufen. Zum Beispiel, US 4 022 640 offenbart die Verwendung von Stählen aus der Reihe AISI 434, AISI 405, AISI 409, AISI 439 und AISI 431.

Vor diesem Hintergrund besteht das der Erfindung zugrundeliegende Problem darin, das Schwingungsverhalten von Federelementen, beispielsweise das Wischverhalten von Scheibenwischern mit einer Federschiene zu verbessern.

Dazu schlägt die Erfindung vor, als Werkstoff für Federelemente, insbesondere Federschienen einen ferritischen Chrom-Stahl mit 0,03 bis 0,12% Kohlenstoff, 0,2 bis 0,9% Silizium, 0,3 bis 1 % Mangan, 13 bis 20% Chrom, 0,1 bis 2,0% Molybdän, 0,05 bis 1,0% Kupfer, 0,02 bis 0,05% Stickstoff, unter 0,01 % Titan, 0,01 bis 0,10% Niob und 0,02 bis 0,25% Vanadium, Rest Eisen zu verwenden.

Der Stahl kann höchstens 0,1% Kohlenstoff, höchstens 1,5% Molybdän sowie 0,1% Kupfer bis 0,5% und mindestens 0,03% Stickstoff - einzeln oder nebeneinander - enthalten.

Besonders bewährt hat sich ein Stahl mit 0,06 bis 0,1% Kohlenstoff, 15 bis 18% Chrom und 0,8 bis 1,5% Molybdän.

Das erfindungsgemäße Federelement besitzt eine Koerzitivkraft $H_C$ von 190 bis 240 A/cm sowie eine Sättigungsmagnetisierung $J_{ma}$ von 1,45 bis 1,75 T, was einem Ferritanteil im Gefüge von etwa 10% bzw. 55% entspricht.

Diese Daten lassen sich beispielsweise dadurch erreichen, daß Kaltband oder Flachdraht aus der erfindungsgemäßen Legierung kaltverformt und anschließend lösungsgeglüht sowie an Luft abgekühlt oder mit Wasser abgeschreckt und dabei ein magnetisierbares Gefüge mit der oben erwähnten magnetischen Sättigung eingestellt wird. Mit Hilfe mindestens eines weiteren Kaltverformens läßt sich dann gegebenenfalls stufenweise die gewünschte Koerzitivkraft einstellen.

Zur Verbesserung der mechanischen und/oder optischen Eigenschaften kann das Ausgangsmaterial oder das Federelement (Federschiene) mit einer vorzugsweise 50 bis 150 μm dicken Beschichtung aus einem Duroplast-Pulverlack versehen werden. Das Beschichten geschieht unter Wärmeeinwirkung und ist daher zwangsläufig mit einem vorteilhaften Anlassen des Werkstoffs verbunden.

Die erfindungsgemäßen Federelemente zeichnen sich durch eine hohe Federkraft und eine hohe Witterungsbeständigkeit sowie insbesondere eine starke magnetomechanische Schwingungsdämpfung aus. Das vorteilhafte Schwingungsverhalten erlaubt den Wegfall der aufwendigen Krallen und gegebenenfalls auch des Krallenbügels, mithin einen Scheibenwischer, bei dem der Wischerarm über den Hauptbügel direkt an der Federschiene angreift.

Das aus Ferrit und Martensit mit unmagnetischen Feinausscheidungen wie Nitriden und Karbonitriden bestehende Gefüge gewährleistet eine hohe Anfangsdämpfung, deren Ursache eine spannungsinduzierte Domänenwandung der Gefügebestandteile ist. Dabei handelt es sich um innere Änderungen der Magnetisierung wie spannungsinduzierte anelastische Domänenwandbewegungen, die zu Wirbelstromverlusten führen und dadurch Schwingungsenergie verbrauchen.

Die Erfindung wird nachfolgend anhand von Zeichnungen in Verbindung mit Ausführungsbeispielen des näheren erläutert. Dabei zeigen:

Fig. 1      den Aufbau eines herkömmlichen Wischerarms,

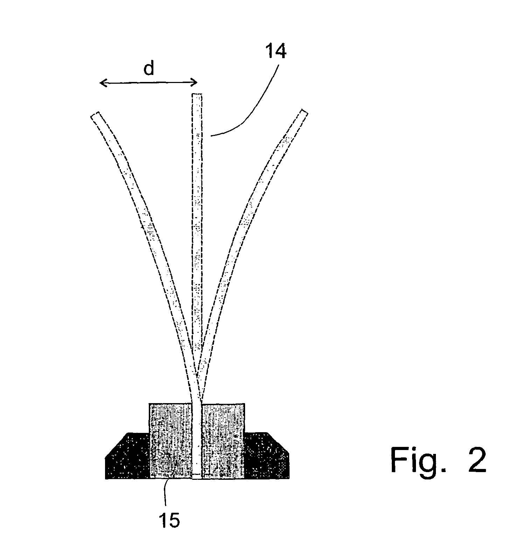

Fig.2      eine Meßvorrichtung zum Bestimmen des Schwingungsverhaltens von Federschienen,
Fig. 3      eine grafische Darstellung des Schwingungsverhaltens herkömmlicher Federschienen,
Fig. 4      eine grafische Darstellung des Schwingungsverhaltens einer erfindungsgemäßen Federschiene im Vergleich zu zwei Federschienen aus herkömmlichen Stählen.

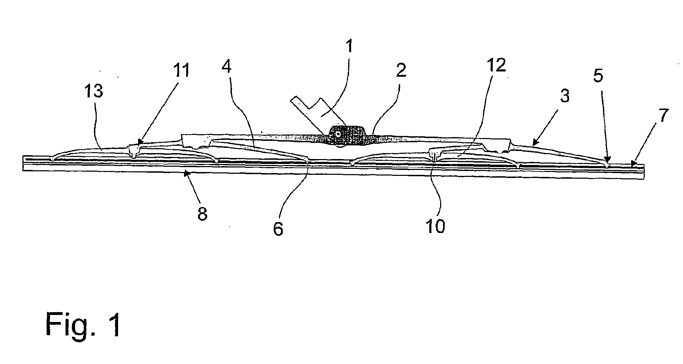

Nach der Darstellung in Fig. 1 besteht ein herkömmlicher Scheibenwischer aus einem Wischerarm 1, dessen Ende gelenkig mit einem Hauptbügel 2 verbunden ist. An den beiden Enden des Hauptbügels ist jeweils ein Krallenbügel 3, 4 gelenkig gelagert. Die Enden 5,6 der längeren Schenkel der Krallenbügel 3, 4 greifen gelenkig an einer Federschiene 7 an, die zusammen mit einer gummielastischen Wischleiste 8 als Wischerblatt zum Entfernen von Wasser und Verschmutzungen auf einer Fahrzeugscheibe dient.

Die kürzeren Schenkel der Krallenbügel 3, 4 sind hingegen über Gelenke 10, 11 jeweils mit einer Kralle 12, 13 verbunden, deren Enden gelenkig an der Federschiene 7 angreifen.

Die Verwendung einer erfindungsgemäßen Federschiene erlaubt es, bei einem Scheibenwischer der dargestellten Art auf die beiden Krallenbügel 3, 4 oder auch auf die Krallen 12, 13 zu verzichten. Dadurch verringert sich der Montageaufwand für den Scheibenwischer um etwa 50%. Dies gilt unabhängig von dem Querschnittsprofil der Federschiene, deren vorteilhaftes Dämpfungsvermögen sich bei unterschiedlichen Profilen zeigt.

Die Erfindung wird nachfolgend anhand von Ausführungsbeispielen und Vergleichslegierungen des näheren erläutert.

Aus der nachfolgenden Tabelle 1 ergeben sich die Zusammensetzungen von fünf erfindungsgemäßen Chrom-Stählen E1 bis E5 sowie von sieben Vergleichsstählen V6 bis V12.

*Tabelle I*

| Stahl | % C | % Si | % Mn | % Cr | % Ni | % Mo | % Cu | %N |
|-------|------|------|------|------|------|------|------|-------|
|       |      |      |      |      |      |      |      |       |
| E1 | 0,06 | 0,50 | 0,65 | 17,3 | 0,26 | 0,15 | 0;21 | 0,030 |
| E2 | 0,07 | 0,52 | 0,48 | 17,0 | 0,32 | 0,14 | 0,15 | 0,045 |
| E3 | 0,08 | 0,48 | 0,52 | 16,2 | 0,35 | 0,10 | 0,12 | 0,040 |
| E4 | 0,10 | 0,65 | 0,61 | 17,6 | 0,40 | 0,07 | 0,15 | 0,035 |
| E5 | 0,06 | 0,44 | 0,92 | 16,8 | 0,30 | 0,82 | 0,35 | 0,035 |
| V6 | 0,03 | 0,58 | 0,49 | 17,1 | 0,32 | 0,10 | 0,12 | 0,040 |

Tabelle fortgesetzt

| Stahl | % C | % Si | % Mn | % Cr | % Ni | % Mo | % Cu | %N |
|---|---|---|---|---|---|---|---|---|
| V7 | 0,35 | 0,62 | 0,69 | 14,1 | 0,18 | 0,08 | 0,17 | 0,030 |
| V8 | 0,07 | 0,45 | 0,98 | 18,0 | 6,12 | 0,12 | 0,09 | 0,360 |
| V9 | 0,10 | 0,86 | 1,22 | 17,4 | 8,15 | 0,36 | 0,19 | 0,020 |
| V10 | 0,47 | 0,25 | 0,55 | Spuren | Spuren | Spuren | Spuren | Spuren |
| V11 | 0,55 | 0,48 | 0,94 | 0,95 | Spuren | Spuren | Spuren | Spuren |
| V12 | 0,79 | 0,18 | 0,78 | Spuren | Spuren | Spuren | Spuren | Spuren |

Die Stähle wurde hinsichtlich ihrer

Zugfestigkeit $R_m$
Koerzitivkraft $H_C$
Sättigungsmagnetisierung J
Dämpfung als prozentuale Amplitude nach 15 Sekunden
Dämpfung als prozentuale Amplitude nach 25 Sekunden

untersucht.

Für die Herstellung einer Federschiene wurden die erfindungsgemäßen Legierungen E1 bis E6 mit einem Querschnitt von 28 mm$^2$ im weichgeglühten Zustand eingesetzt. Nach einem ersten Kaltverformen wurden die Proben 12 Minuten einem Lösungsglühen bei 1050°C ausgesetzt, rasch abgekühlt und einer weiteren Kaltverformung bis zu einem Endquerschnitt von 6 mm$^2$ unterzogen. Bei diesen Bearbeitungsschritten ergibt sich eine Gesamtverformung von 78%. Die Proben wurden danach zur Vorbereitung einer Beschichtungs- bzw. Anlaßbehandlung in einem Ultraschallbad gereinigt, auf 350°C erwärmt und mit einem Pulverlack beschichtet. Die Beschichtung wurde während der Abkühlphase der Anlaßbehandlung aufgebracht, um die Prozeßwärme der Federschiene für das Aushärten des Pulverlacks zu nutzen.

Eine der Proben aus der Legierung E4 wurde vor dem vorerwähnten ersten Kaltverformen zusätzlich vorverformt, anschließend geglüht und dann so weiterbehandelt wie die anderen Proben (vgl. Versuch 8).

Die Untersuchungsergebnisse sind in der nachfolgenden Tabelle II zusammengestellt, die ausser der Schichtdicke auch die Härtetemperatur bzw. die Beschichtungstemperatur umgibt; sie bewirkt ein Anlassen und führt zu einer Erhöhung der Zugfestigkeit, wie das Dämpfungsverhalten des Versuchs 5 zeigt, der sich auf eine Probe der Legierung E1 ohne Beschichtung und demgemäß auch ohne Anlassen beim Beschichten bezieht. Hier wird die Bedeutung des Anlassens für den Zuwachs an Festigkeit deutlich.

*Tabelle II*

| Versuch | Stahl | Koerzitivkraft | Sättig.Magnetis. | Zugfestigkeit | %Restamplitude nach | | Beschichtung Dicke/Härtetemp. | | Bewertung | Bewertung |
|---|---|---|---|---|---|---|---|---|---|---|
| Nr. | | Hc (A/cm) | J (T) | Rm (MPa) | 0,15 s | 0,25 s | min | °C | Festigkeit | Dämpfung |
| 1 | E1 | 217 | 1,65 | 1682 | 39,0 | 15,0 | keine | 340 | + | gut |
| 2 | E1 | 216 | 1,67 | 1695 | 31,0 | 14,0 | 0,8 | 340 | + | gut |
| 3 | E1 | 219 | 1,52 | 1774 | 36,0 | 12,5 | 0,8 | 340 | + | sehrgut |
| 4 | E1 | 192 | 1,82 | 1685 | 54,0 | 35,0 | 0,8 | 340 | + | schlecht |
| 5 | E2 | 225 | 1,76 | 1851 | 35,0 | 12,0 | 0,8 | 340 | + | sehr gut |
| 6 | E3 | 215 | 1,72 | 1712 | 35,0 | 12,5 | 0,8 | 340 | + | sehr gut |
| 7 | E4 | 198 | 1,62 | 1849 | 34,5 | 10,0 | 0,8 | 340 | + | sehr gut |
| 8 | E4 | 205 | 1,63 | 1670 | 35,0 | 11,0 | 0,8 | 340 | + | sehr gut |
| 9 | E5 | 230 | 1,53 | 1716 | 34,0 | 11,0 | 0,8 | 340 | + | sehr gut |
| 10 | E5 | 232 | 1,55 | 1728 | 33,0 | 10,0 | 0,8 | 340 | + | sehr gut |
| 11 | V6 | 38 | 1,54 | 535 | n.b. | n.b. | 0,8 | 340 | - | |
| 12 | V6 | 47 | 1,48 | 726 | n.b. | n.b. | 0,8 | 340 | - | |
| 13 | V6 | 49 | 1,43 | 980 | n.b. | n.b. | keine | - | - | |
| 14 | V7 | 382 | 1,58 | 1682 | 60,0 | 39,0 | 0,8 | 340 | + | mittel |
| 15 | V8 | 936 | 0,32 | 1640 | 55,0 | 34,0 | 0,8 | 340 | + | schlecht |
| 16 | V9 | 914 | 0,36 | 1728 | 54,5 | 34,0 | 0,8 | 340 | + | schlecht |
| 17 | V9 | 973 | 0,31 | 1620 | 57,0 | 35,0 | 0,8 | 340 | + | ungenügend |
| 18 | V9 | 766 | 0,22 | 1452 | n.b. | n.b. | 0,8 | 340 | - | |
| 19 | V10 | 123 | 1,83 | 1820 | 60,0 | 39,0 | keine | - | + | schlecht |
| 20 | V10 | 125 | 1,82 | 1845 | 59,0 | 38,0 | 0,8 | 340 | + | schlecht |
| 21 | V11 | 129 | 1,84 | 1960 | 61,0 | 38,0 | keine | - | + | schlecht |
| 22 | V11 | 131 | 1,91 | 1986 | 59,0 | 37,0 | 0,8 | 340 | + | schlecht |
| 23 | V12 | 122 | 1,97 | 2020 | 63,0 | 42,0 | keine | - | + | ungenügend |
| 24 | V12 | 122 | 1,97 | 2022 | 62,0 | 40,0 | 0,8 | 340 | + | ungenügend |

Bei den Versuchen 11 bis 13 und 18 handelt es sich um Stähle, die zu weich sind und keine ausreichende Federeigenschaften besitzen. Die Bestimmung der Federdämpfung machte daher wenig Sinn. Demgemäß ist zu diesen Versuchen in der Tabelle II keine Restamplitude angegeben (n.b.).

Generell gilt für die Restamplitude, daß die Schwingungsdämpfung um so besser ist, je geringer die angegebene Restamplitude ist.

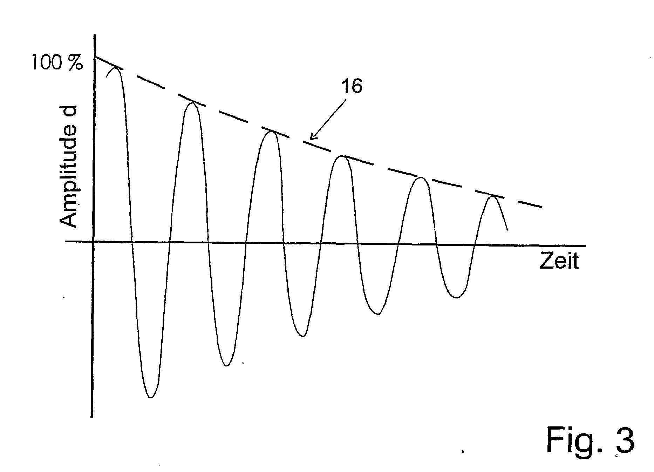

Das Schwingungsverhalten wurde mit Hilfe der in Fig. 3 dargestellten Meßvorrichtung bestimmt. Bei den Versuchen wurden die Proben 14 einseitig in einen Sockel 15 eingespannt, dann seitlich um eine Distanz von D = 11 mm ausgelenkt und sich sodann selbst überlassen. Mit Hilfe eines Sensors wurden die Schwingungen der freischwingenden Proben in Abhängigkeit von der Zeit erfaßt, das verstärkte Signal einer PC-Meßkarte zugeführt und mit einer zeitlichen Auflösung von 4400 Meßwerten pro Sekunde als Schwingungsdiagramm gespeichert. Von diesem Schwingungsdiagramm wurde die Einhüllende bestimmt und an der sich daraus ergebenden Hüll- bzw. Dämpfungskurve 16 nach 0,15 und nach 0,25 Sekunden jeweils die im Vergleich zur Ausgangsamplitude im Zeitpunkt Null (100%) die prozentuale Restamplitude bestimmt.

Die Ermittlung der magnetischen Kennwerte der Proben geschah mit Hilfe einer Hysteresekurve, aus der die Werte für die Koerzitivkraft $H_C$ und die Sättigungsmagnetisierung $J_{max}$ nach DIN 50460 entnommen wurden.

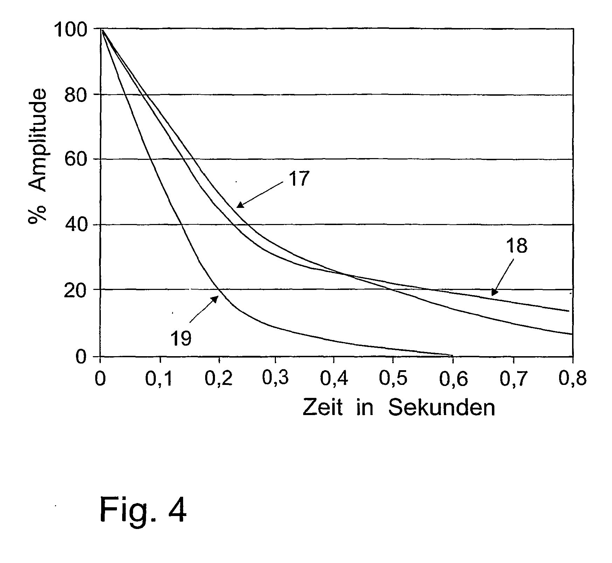

In Fig. 4 ist das typische Schwingungsverhalten herkömmlicher Federschienen dargestellt. Der Verlauf der Hüll- bzw. Dämpfungskurve 16 folgt einer exponentiellen Funktion. Dies erklärt sich daraus, dass beim Schwingen einer Blattfeder je nach Auslenkung an der Blattoberfläche abwechselnd eine Druck- oder eine Zugspannung auftritt. Eine solche Schwingung wird in der Regel durch eine Differentialgleichung beschrieben. Den Berechnungen einer Schwingung wird üblicherweise ein lineares Kraftgesetz zu Grunde gelegt. Dieses lineare Kraftgesetz bewirkt, dass die Schwingung sehr gut durch eine exponentiell abfallende Schwingungskurve beschrieben werden kann. Gibt es jedoch wie bei der erfindungsgemäßen Legierung magnetomechanische Wechselwirkungen im Gefüge, so ist die Voraussetzung für das lineare Kraftgesetz nicht mehr erfüllt, und es kommt beim Schwingen zu einer mechanischen Hysterese. Diese ist bei großen Amplituden oder Ausschlägen stärker als bei kleinen, da die Verlustenergie von der Fläche der Hysteresekurve abhängt. In einem solchen Fall wird keine exponentiell abfallende Dämpfungskurve erzielt. Vielmehr gibt es eine sehr starke Anfangsdämpfung (vgl. Hornbogen, Metallkunde, 2. Auflage).

Ähnlich verlaufen die beiden Dämpfungskurven 17, 18 für die Federschienen aus Vergleichsstählen V9 und V10 in den Tabellen I und II; diese folgen dem Hookschen Gesetz. Anders hingegen verläuft die Kurve 19 für die erfindungsgemäße Federschiene aus dem Stahl E1 in Tabelle I bzw. dem Versuch 2 in Tabelle II. Der Verlauf der Kurve 19 zeigt aufgrund ihres verhältnismäßig steilen Abfalls eine hohe Anfangsdämpfung, die sich durch eine nichtlineare Abweichung vom Hookschen Gesetz erklären läßt und ihre Ursache in den erwähnten spannungsinduzierten Domänenwandbewegungen hat, wie sie innerhalb des erfindungsgemäßen Wertefeldes von Koerzitivkraft und magnetischer Sättigung auftritt.

Grundsätzlich bewirkt eine mechanische Spannung σ in einem Werkstoff eine Änderung des Atomabstandes, was in der Praxis als Dehnung ε in Erscheinung tritt. Daraus leitet sich die bekannte Beziehung, bzw. der Elastizitätsmodul E ab, entsprechend:

$$E = E_G = \sigma \frac{1}{\varepsilon_G}$$

(der Index G besagt, daß der E-Modul von der Gitterdehnung abhängt).

Im Falle magnetisch gekoppelter Gefügebestanteile wie Ferrit und Martensit bewirkt eine Spannung aber zusätzlich zur Gitterdehnung noch eine Veränderung der Domänenanordnurig, weshalb in der Gleichung eine Zusatzdehnung $\varepsilon_{MM}$ berücksichtigt werden muß. Dadurch ergibt sich die Beziehung

$$E = E_G + E_{MM} = \sigma \left( \frac{1}{\varepsilon_G} + \frac{1}{\varepsilon_{MM}} \right)$$

Mit $\varepsilon_{MM}$ sind alle magnetisch induzierten Dehnungen und Zusatzdehnungen zusammengefaßt; sie setzt sich aus 3 Teildehnungen zusammen und erfaßt auch die Volumenmagnetostriktion und ihren analogen Dehnungsanteil.

Die magneto-mechanische Dämpfung kommt somit dadurch zustande, daß durch eine mechanische Spannung nicht nur die Änderung des Atomabstandes (Gitterdehnung), sondern auch die Änderungen durch die spannungsinduzierten Domänenwandbewegungen wirksam werden.

Das günstige Schwingungsverhalten erklärt sich durch eine starke magnetomechanische Dämpfung. Diese entsteht dadurch, daß bei einer Schwingung infolge zeitlicher Änderungen in der mechanischen Spannung die Domänenanordnungen in Form einer erzwungenen Volumenmagnetostriktion verändert werden.

Da die spannungsinduzierte Domänenwandbewegung mit anelastischen und Wirbelstromverlusten verbunden ist, tritt bei schwingender Belastung eine mechanische Hysterese auf, d.h. eine nichtlineare Abweichung vom Hookschen Gesetz.

Dabei spielt naturgemäß die Stärke der Hindernisse für die Domänenwandbewegungen (also die Wandenergie und damit der $H_C$-Wert) eine große Rolle, da sie letztlich für das Ausmaß der Dämpfung verantwortlich sind. Eine optimale magnetomechanische Dämpfung durch spannungsinduzierte Domänenwandbewegungen ist demzufolge nur in einem bestimmten Wertefeld von J (magnetischer Polarisation) und HC (Koerzitivkraft) möglich.

Die Dämpfung läßt sich durch eine Beschichtung mit Hilfe eines Duroplast-Pulverlacks weiter verbessern läßt. Eine derartige Beschichtung wirkt sich in mehrfacher Hinsicht vorteilhaft aus; sie erhöht die Korrosionsbeständigkeit sowie die Zugfestigkeit und erlaubt einen für das Einschieben einer Federschiene in die Wischleiste günstigen Reibungskoeffizienten sowie, die Oberflächenstruktur und das Aussehen dem Erscheinungsbild der Wischleiste, aus Gummi anzupassen.

Ursächlich für das ausgezeichnete Dämpfungsverhalten der erfindungsgemäßen Federelemente (Federschiene) sind das aus weichmagnetischem Ferrit und demgegenüber verhältnismäßig hartmagnetischem Martensit mit unmagnetischen Feinausscheidungen aus Karbiden und/oder Karbonitriden bestehende Gefüge sowie die Volumenanteile der beiden magnetischen Phasen Ferrit und Martensit. Der Ferrit besitzt eine hohe magnetische Polarisation, d.h. eine sehr starke innere Magnetisierung im Vergleich zu der Sättigungsmagnetisierung von reinem Eisen mit 2,2 T bzw. 22000 Gauss. Daraus resultiert eine leichte Ummagnetisierung, d.h. der Ferrit ist magnetisch weich, was sich an einer niedrigen Koerzitivkraft bzw. einer niedrigen Wandenergie zeigt. Der Martensit besitzt zwar eine geringere Magnetisierbarkeit bzw. eine deutlich geringere magnetische Polarisation; im Vergleich zum Ferrit sind aber seine magnetischen Domänen aufgrund der Feinausscheidungen, aber auch durch im Kristallgitter gelöste Legierungselemente energetisch stärker fixiert. Im Vergleich zum Ferrit läßt sich der Martensit schwerer ummagnetisieren, er ist daher magnetisch härter und besitzt demzufolge einen höheren HC-Wert.

Bei den magnetischen Domänen handelt es sich um magnetisierbare Bereiche, die durch sogenannte Bloch-Wände begrenzt sind. Die Stabilität der magnetischen Domänen kommt in der sogenannten Wandenergie zum Ausdruck. Die Wandenergien des Ferrits sind im allgemeinen klein und begründen daher eine leichte Ummagnetisierung bzw. eine niedrigen Koerzitivkraft unter etwa 1 A/cm.

Mit Hilfe des Volumenanteils der beiden magnetisierbaren Gefügebestandteile Ferrit und Martensit (vorzugsweise 30% Ferrit, Rest Martensit einschließlich geringfügiger nicht magnetischer Ausscheidungen) sowie der dadurch bedingten magnetischen Härte läßt sich das Dämpfungsverhalten einstellen bzw. optimieren. Dies geschieht mit Hilfe eines Lösungsglühens mit einer Dauer von 0,5 bis 60 min bei 900 bis 1100 °C und eines Kaltverformens mit einem Gesamtverformungsgrad von über 65%. Auf diese Weise läßt sich eine magnetische Sättigung als Summenwert für die beiden magnetisierbaren Phasen Ferrit (10 bis 55%, Rest im wesentlichen Martensit) und Martensit in der Größenordnung von 1,45 bis 1,75 T erreichen.

Dem Kaltverformen kann sich zum Einstellen der magnetischen Härte eine Anlaßbehandlung anschließen, beispielsweise mit einer Dauer von 0,1 bis 1 min bei einer Temperatur von 200 bis 380 °C, um eine Koerzitivkraft von 190 bis 320 A/cm zu erreichen. Die Anlassbehandlung kann gleichzeitig mit dem Beschichten mit einem warmaushärtenden Lackpulver bzw. Lack geschehen.


**Patentansprüche**

**1.** Federelement, insbesondere Federschiene für Scheibenwischer aus einem ferritischen Chrom-Stahl, bestehend aus

| | |
|---|---|
| 0,03 bis 0,12% | Kohlenstoff |
| 0,2 bis 0,9% | Silizium |
| 0,3 bis 1 % | Mangan |
| 13 bis 20% | Chrom |
| unter 0,5% | Nickel |
| 0,1 bis 2% | Molybdän |
| 0,05 bis 1,0% | Kupfer |
| 0,02 bis 0,05% | Stickstoff |
| unter 0,01 % | Titan |

Tabelle fortgesetzt

0,01 bis 0,10%   Niob
0,02 bis 0,25%   Vanadium, Rest Eisen.

**2.** Federelement nach Anspruch 1, **dadurch gekennzeichnet, daß** der Stahl höchstens 0,1% Kohlenstoff, höchstens 1,5% Molybdän, 0,1 bis 0,5% Kupfer und mindestens 0,03% Stickstoff enthält.

**3.** Federelement nach Anspruch 1, **gekennzeichnet durch** einen Kohlenstoffgehalt von 0,06 bis 0,1%, einen Chromgehalt von 15 bis 18% und einen Molybdängehalt von 0,8 bis 1,5%.

**4.** Federelement nach einem der Ansprüche 1 bis 3, **gekennzeichnet durch** eine Koerzitivkraft von 190 bis 320 A/cm und eine magnetische Sättigung von 1,45 bis 1,75 T.

**5.** Federelement nach einem der Ansprüche 1 bis 4, **gekennzeichnet durch** eine Pulverlack-Beschichtung aus Duroplast.

**6.** Federelement nach Anspruch 5, **gekennzeichnet durch** eine Schichtdicke von 0,05 bis 0,15 mm.

**7.** Federelement nach einem der Ansprüche 1 bis 6, **gekennzeichnet durch** ein Lösungsglühen von 0,5 bis 60 min bei 900 bis 1100 °C.

**8.** Federelement nach Anspruch 7, **gekennzeichnet durch** ein Kaltverformen mit einem Verformungsgrad von über 65%.

**9.** Federelement nach Anspruch 8, **gekennzeichnet durch** ein Anlassen nach dem Kaltverformen von 0,1 bis 1 min bei 200 bis 380 °C.

**10.** Federelement nach Anspruch 9, **gekennzeichnet durch** eine Aushärtungstemperatur der Beschichtung im Bereich der Anlaßtemperatur.


**Claims**

**1.** Spring element, in.particular sprung bar for windscreen wipers, made of a ferritic chrome steel, comprising

| | |
|---|---|
| 0.03% to 0.12% | carbon |
| 0.2% to 0.9% | silicon |
| 0.3% to 1% | manganese |
| 13% to 20% | chromium |
| under 0.5% | nickel |
| 0.1% to 2% | molybdenum |
| 0.05% to 1.0% | copper |
| 0.02% to 0.05% | nitrogen |
| under 0.01% | titanium |
| 0.01% to 0.10% | niobium |
| 0.02% to 0.25% | vanadium, |

remainder iron.

**2.** Spring element according to claim 1, **characterised in that** the steel contains no more than 0.1% carbon, no more than 1.5% molybdenum, in the range of 0.1% to 0.5% copper and at least 0.03% nitrogen.

**3.** Spring element according to claim 1, **characterised in that** it has a carbon content in the range of 0.06% to 0.1%, a chromium content in the range of 15% to 18% and a molybdenum content in the range of 0.8% to 1.5%.

**4.** Spring element according to one of the claims 1 to 3, **characterised in that** it has a coercivity in the range of 190 A/cm to 320 A/cm and a magnetic saturation in the range of 1.45T to 1.75T.

**5.** Spring element according to one of the claims 1 to 4, **characterised in that** it has a powder paint coating of thermosetting plastics.

**6.** Spring element according to claim 5, **characterised in that** it has a coating layer thickness in the range of 0.05 mm to 0.15 mm.

**7.** Spring element according to one of the claims 1 to 6, **characterised by** solution treatment for in the range of 0.5 min to 60 min at a temperature in the range of 900°C to 1100°C.

**8.** Spring element according to claim 7, **characterised by** cold forming with a level of deformation of more than 65%.

**9.** Spring element according to claim 8, **characterised by** tempering after cold-forming for in the range of 0.1 min to 1 min at a temperature in the range of 200°C to 380°C.

**10.** Spring element according to claim 9, **characterised by** a hardening temperature for the coating in the region of the tempering temperature.

**Revendications**

**1.** Élément flexible, en particulier lame d'aiguille ou rail flexible pour essuie-glace en un acier ferritique au chrome, composé de

| | |
|---|---|
| 0,03 à 0,12 % | de carbone |
| 0,2 à 0,9 % | de silicium |
| 0,3 à 1 % | de manganèse |
| 13 à 20 % | de chrome |
| moins de 0,5 % | de nickel |
| 0,1 à 2 % | de molybdène |
| 0,05 à 1,0 % | de cuivre |
| 0,02 à 0,05 % | d'azote |
| moins de 0,01 % | de titane |
| 0,01 à 0,10 % | de niobium |
| 0,02 à 0,25 % | de vanadium, le reste de fer. |

**2.** Élément flexible selon la revendication 1, **caractérisé en ce que** l'acier contient au plus 0,1 % de carbone, au plus 1,5 % de molybdène, 0,1 à 0,5 % de cuivre et au moins 0,03 % d'azote.

**3.** Élément flexible selon la revendication 1, **caractérisé par** une teneur en carbone comprise entre 0,06 et 0,1 %, une teneur en chrome comprise entre 15 et 18 % et une teneur en molybdène comprise entre 0,8 et 1,5 %.

**4.** Élément flexible selon l'une des revendications 1 à 3, **caractérisé par** une force coercitive comprise entre 190 et 320 A/cm et une saturation magnétique comprise entre 1,45 et 1,75 T.

**5.** Élément flexible selon l'une des revendications 1 à 4, **caractérisé par** un revêtement de poudre de laque en matière plastique thermodurcissable ou Duroplast.

**6.** Élément flexible selon la revendication 5, **caractérisé par** une épaisseur de couche comprise entre 0,05 et 0,15 mm.

**7.** Élément flexible selon l'une des revendications 1 à 6, **caractérisé par** un recuit de mise en solution pendant 0,5 à 60 mn à une température comprise entre 900 et 1 100 °C.

8. Élément flexible selon la revendication 7, **caractérisé par** une déformation à froid avec un degré de déformation supérieur à 65 %.

9. Élément flexible selon la revendication 8, **caractérisé par** un revenu suite à la déformation à froid pendant 0,1 à 1 mn à une température comprise entre 200 et 380 °C.

10. Élément flexible selon la revendication 9, **caractérisé par** une température de durcissement du revêtement dans la zone de la température de revenu.

Fig. 1

Fig. 2

Fig. 3

Fig. 4